# EUROPÄISCHE PATENTSCHRIFT

(11) **EP 2 691 200 B1**
(45) Veröffentlichungstag und Bekanntmachung des Hinweises auf die Patenterteilung: **01.08.2018**
(21) Anmeldenummer: 12706482.2
(22) Anmeldetag: 28.02.2012
(51) Int. Cl.: B23B 5/16, B26D 3/16, B26D 3/28

(54) **MASCHINE ZUM ABTRAGEN VON MATERIAL AM UMFANG EINES SCHLAUCHES**
MACHINE FOR REMOVING MATERIAL AT THE CIRCUMFERENCE OF A HOSE
MACHINE POUR ENLEVER DE LA MATIÈRE SUR LA PÉRIPHÉRIE D'UN TUYAU

(30) Priorität: 31.03.2011 DE 102011015652; 26.07.2011 DE 102011108647
(43) Veröffentlichungstag der Anmeldung: 05.02.2014
(73) Patentinhaber: Uniflex-Hydraulik GmbH, 61184 Karben (DE)
(72) Erfinder: STICKER, Patrick, 61118 Bad Vilbel-Dortelweil (DE); BAUMGARTNER, Carsten, 35321 Laubach (DE); WINTER, Tobias, 63636 Brachttal (DE)
(74) Vertreter: Grättinger Möhring von Poschinger Patentanwälte Partnerschaft
(86) Internationale Anmeldenummer: PCT/EP2012/000847
(87) Internationale Veröffentlichungsnummer: WO 2012/130361

(56) Entgegenhaltungen:
- DE-A1- 2 209 586
- DE-A1- 2 724 859
- DE-A1- 19 917 101
- DE-A1-102009 010 776
- DE-C- 373 408
- US-A- 3 759 121
- US-A- 3 911 574
- US-A- 4 691 600
- DATABASE WPI Week 197530 Thomson Scientific, London, GB; AN 1975-H6978W XP002676030, -& SU 454 094 A (KRASNYI KOTELSHCHIK) 17. Februar 1975 (1975-02-17)

## Beschreibung

Die vorliegende Erfindung betrifft eine Maschine zum Abtragen von Material am Umfang eines Schlauches, umfassend einen Antriebsmotor, ein von diesem um eine Drehachse rotierend antreibbares Abtragwerkzeug und eine Stütz- und Führungsstruktur für einen konzentrisch zur Drehachse angeordneten Schlauch, wobei das Abtragwerkzeug eine rotierende Tragstruktur und mindestens ein von dieser getragenes Abtragelement umfasst.

Zur Herstellung von einbaufertigen Schlauchleitungen, insbesondere solcher für Hydraulikanwendungen, werden typischerweise endseitig an einen Schlauchabschnitt Armaturen - unter Verwendung von Radialpressen - angepresst. Um dabei eine den teilweise extrem hohen Drücken dauerhaft standhaltende Verbindung der Armaturen mit dem Schlauchabschnitt zu gewährleisten, werden dessen Enden üblicherweise geschält, was bedeutet, dass Material - zum Teil bis auf die erste Armierungslage - spanabhebend abgetragen wird. Hierzu werden Schälmaschinen eingesetzt, die den betreffenden Schlauch außen oder innen oder zeitgleich außen sowie innen schälen. Eine Schälmaschine, die dem gleichzeitigen Außen- und Innenschälen eines Schlauches dient, ist beispielsweise aus der DE 299 03 687 U1 bekannt. Im Hinblick auf das Innenschälen eines Schlauches wir ergänzend auf die DE 199 17 101 C2 verwiesen.

Die SU 454094 A offenbart eine - zum Reinigen von Rohrenden bestimmte- Vorrichtung mit den Merkmalen des Oberbegriffs des unabhängigen Anspruchs 1. Bei der Vorrichtung der SU 454094 A sind an einer rotierenden Tragstruktur mehrere wippenartige Elemente - um sich in Umfangsrichtung erstreckende Achsen schwenkbar - gelagert, bei denen jeweils am ersten Ende ein Fliehgewicht und am zweiten Ende ein Schneideinsatz angeordnet sind. Demnach wirkt auf den jeweiligen Schneideinsatz ein Verstellmechanismus mit einer ein Fliehgewicht umfassenden Zentrifugalkraft-Verstellung, wobei mit zunehmender Drehzahl der Tragstruktur die Anlagekraft des Schneideinsatzes am Rohr zunimmt.

Die US 3911574 A offenbart eine Vorrichtung zum Schneiden von Rohren von innen her, bei der mehrere an einer rotierenden, in das Rohr eingebrachten Trageinrichtung lageveränderbar gelagerte Schneideinsätze bei entsprechender Drehzahl der Trageinrichtung zunehmend fliehkraftbedingt gegen die Rohrwandung gedrückt werden. Eine Abstechvorrichtung für Stangenmaterial, bei der wiederum an einer rotierenden Trageinrichtung wippenartige Elemente mit einem Messer einerseits sowie einem Fliehgewicht andererseits gelagert sind, ist aus der DE 373408 A bekannt.

Die DE 2724859 A1 offenbart eine Vorrichtung zum Schneiden von Schläuchen, die ebenfalls wippenartige Elemente mit einem Messer einerseits und einem Fliehgewicht andererseits umfasst. Die Achsen, um die herum die wippenartigen Elemente schwenkbar sind, sind bei dieser Vorrichtung aber parallel zur Drehachse der Trageinrichtung orientiert.

In Werkstätten und Betrieben, in denen - durch Anbringen von Armaturen endseitig an Schlauchabschnitte - einbaufertige Schlauchleitungen hergestellt werden, werden typischerweise in rascher Abfolge verschiedene Schläuche be- und verarbeitet, die sich insbesondere durch ihre Abmessungen (Außendurchmesser, Innendurchmesser, Wandstärke) unterscheiden. Vor diesem Hintergrund liegt der vorliegenden Erfindung die Aufgabe zu Grunde, eine Maschine zum Abtragen von Material am Umfang, d.h. am Außen- und/oder Innenumfang, eines Schlauches der eingangs angegebenen Art bereitzustellen, mit der sich unterschiedliche Schläuche besonders wirtschaftlich be- bzw. verarbeiten lassen, insbesondere im Hinblick auf einen minimalen Aufwand für das Einrichten bzw. Umrüsten der Maschine im Falle der Be- bzw. Verarbeitung von Schläuchen mit unterschiedlichem Außen- und/oder Innendurchmesser.

Gelöst wird diese Aufgabenstellung gemäß der vorliegenden Erfindung, indem bei einer Maschine der im Oberbegriff des Anspruchs 1 angegebenen Art (jeweils) ein Abtragelement und ein diesem zugeordnetes, benachbart zu diesem angeordnetes Fliehgewicht über ein Getriebe gegenläufig gekoppelt sind. Die erfindungsgemäße Maschine zum Abtragen von Material am Umfang eines Schlauches zeichnet sich somit dadurch aus, dass das mindestens eine Abtragelement nicht eine feste durch das Einrichten der Maschine vorgegebene Stellung einnimmt, durch die der Abstand des Abtragelements zur Drehachse dementsprechend vorgegeben ist, sondern dass vielmehr das mindestens eine Abtragelement in bzw. an der Tragstruktur lageveränderbar gelagert ist. Auf das mindestens eine Abtragelement wirkt dabei ein Verstellmechanismus, welcher eine Zentrifugalkraft-Verstellung umfasst, zu welchem Zweck der Verstellmechanismus über mindestens ein Fliehgewicht verfügt. Der Verstellmechanismus ist dabei dergestalt ausgeführt, dass bei zunehmender Drehzahl der Tragstruktur die Anlagekraft des Abtragelements am Schlauch zunimmt, bei Maschinen zum Materialabtrag am Außenumfangs eines Schlauches im Sinne einer Reduzierung des Abstands des Abtragelements zur Drehachse, d.h. auf die Drehachse zubewegt. Abtragelement und zugeordnetes Fliehgewicht sind dabei jeweils über ein Getriebe gegenläufig gekoppelt. In Anwendung der vorliegenden Erfindung ist - jedenfalls innerhalb erheblicher Bandbreiten unterschiedlicher Schlauchabmessungen - ein spezifisches Einrichten der Maschine, um diese an den individuellen Schlauch anzupassen, entbehrlich. Denn das mindestens eine Abtragelement nähert sich, wenn die Tragstruktur bei Inbetriebnahme der Maschine in Drehung versetzt wird, mit zunehmender Drehzahl selbsttätig dem Umfang des Schlauches, d.h. dem zu bearbeitenden Außen bzw. dem Innenumfang, an und beginnt, sobald es dabei auf den Schlauch trifft, mit dem Abtragvorgang. Somit kann insbesondere die - bei Stillstand der Tragstruktur maßgebliche - Grundeinstellung des mindestens einen Abtragelementes so gewählt werden, dass alle üblichen bzw. typischen Schlauchdurchmesser bearbeitet werden können, ein Umrüsten der Maschine somit entbehrlich ist. Auch ist ein verschleißbedingtes Nachstellen der Abtragelemente entbehrlich. Durch geeignete Wahl der Drehzahl der rotierenden Tragstruktur lässt sich zudem erreichen, dass das Schlauchmaterial zuverlässig bis auf die erste, beim Material am Außenumfang radial äußerste Armierungslage des betreffenden Schlauches abgetragen wird, wobei zugleich eine Beschädigung der Armierungslage unterbleibt, weil die Anlagekraft des Abtragelements an dieser einen kritischen Wert nicht überschreitet. Insoweit lässt sich in Anwendung der vorliegenden Erfindung ein weiterer gravierender Vorteil erreichen, indem nämlich - unabhängig von möglichen Toleranzen auf Seiten des Schlauchherstellers und/oder möglichen Exzentrizitäten der Armierungslage - das Abtragen des Schlauchmaterials zuverlässig genau bis auf die Armierungslage erfolgt, was sich günstig auswirkt auf die Zuverlässigkeit der späteren Verbindung der Armatur mit dem Schlauchabschnitt. Als dritter wesentlicher Vorteil der vorliegenden Erfindung ist zu nennen, dass ein Schälen von Schläuchen oder sonstiges Abtragen von Material am Schlauchumfang nicht zwingend von der Stirnseite her erfolgen muss; vielmehr ist, was sich für bestimmte Anwendungen als günstig erweisen kann, auch ein Materialabtrag von Schläuchen zum Ende hin möglich und/oder mit Abstand zum Ende des Schlauches, d.h. unter Erzeugung einer endseitigen Verdickung, indem von dem Schlauchabschnitt unmittelbar benachbart dem Ende weniger Material abgetragen wird als in einem von der Stirnseite weiter entfernten Bereich.

Erkennbar lassen sich somit in Anwendung der vorliegenden Erfindung mit vergleichsweise geringem Aufwand erhebliche praxisrelevante Vorteile erzielen, und zwar sowohl hinsichtlich der Effizienz als auch der Qualität der betreffenden Bearbeitung des Schlauches.

Die vorliegende Erfindung eignet sich gleichermaßen für das Abtragen von Material am Außenumfang eines Schlauches wie auch zum Abtragen von Material am Innenumfang eines Schlauches, wobei im zuletzt genannten Fall das mindestens eine Abtragelement bevorzugt radial verschiebbar in einer Hohlwelle gelagert ist, wobei der Verstellmechanismus beispielsweise Keil- bzw. Kulissengetriebe umfassen kann.

Soweit im Folgenden die vorliegende Erfindung anhand von Maschinen zum Außenschälen von Schläuchen näher erläutert wird, bei denen das Abtragelement als ein einen spanabhebenden Materialabtrag am Außenumfang des Schlauches bewirkendes Schneidelement ausgeführt ist, ist eine Beschränkung der vorliegenden Erfindung auf eine solche Ausführung damit nicht verbunden, und zwar weder hinsichtlich des Ortes des Materialabtrags (am Außenumfang und/oder am Innenumfang), noch hinsichtlich der Art und Weise (z.B. Materialabtrag durch Bürsten oder sonstige abrasive Abtragelemente). Etwas anderes gilt nur dort, wo dies ausdrücklich angegeben ist oder sich aus den Umständen ergibt.

Gemäß einer ersten bevorzugten Weiterbildung der vorliegenden Erfindung ist vorgesehen, dass das mindestens eine Abtragelement an der Tragstruktur linear geführt ist. Besonders bevorzugt ist dabei eine im Wesentlichen radiale Verschiebbarkeit des mindestens einen Abtragelements an der Tragstruktur ausgeführt, was einen geringen Versatz des Verschiebevektors zu der Maschinenachse zulässt. Dies ist günstig im Hinblick auf die Bearbeitung stark unterschiedlicher Schlauchdurchmesser mit zumindest im Wesentlichen gleicher Schneidgeometrie.

Eine andere bevorzugte Weiterbildung der Erfindung zeichnet sich dadurch aus, dass jedem Schneidelement ein linear verschiebbares Fliehgewicht zugeordnet ist. Besonders bevorzugt ist dabei das jeweilige Fliehgewicht zumindest im Wesentlichen radial verschiebbar. Eine derartige radial verschiebbare Lagerung bzw. Führung des mindestens einen Fliehgewichts wirkt sich positiv aus auf die Möglichkeit, mit geringem Aufwand prozessgünstige kinematische und dynamische Verhältnisse zu erreichen.

Weiterhin ist es besonders vorteilhaft, wenn die erfindungsgemäße Maschine zum Außenschälen eines Schlauches zwei einander im Wesentlichen diametral gegenüberliegende Schneidelemente aufweist. Besonders günstig ist es dabei, wenn - insbesondere über den betreffenden Verstellmechanismus - die beiden Schneidelemente dergestalt gekoppelt sind, dass ihre Zustellbewegungen relativ zueinander synchronisiert sind. Für die Bearbeitung, d.h. die Qualität des Ergebnisses, kann es vorteilhaft sein, wenn die Schneidelemente einen geringen Versatz relativ zu jener Mittelebene durch den Schlauch aufweisen, welche parallel zu der Zustellbewegung der Schneidelemente verläuft.

Gemäß einer abermals anderen bevorzugten Weiterbildung der Erfindung ist vorgesehen, dass auf jedes Schneidelement eine dieses im Sinne einer Vergrößerung des Abstandes der Schneide zur Drehachse vorspannende Rückstellfeder wirkt. Auf diese Weise nehmen die Schneidelemente, wenn die Tragstruktur angehalten wird, selbsttätig ihre Grundstellung ein, in der der bearbeitete Schlauch der Maschine leicht entnommen und ein neuer zu bearbeitender Schlauch in die Maschine eingelegt werden kann. In bevorzugter Weiterbildung weist die Rückstellfeder eine progressive Federcharakteristik auf. Dies eröffnet die Möglichkeit, die Anlagekraft des Schneidelements an dem Schlauch auch bei unterschiedlichen Schlauch- bzw. sich ändernden Schäldurchmessern im Wesentlichen konstant zu halten, so dass insbesondere das Schälen des Schlauches bei zunehmendem Fortschritt des Schälprozesses - bei unveränderter Drehzahl - mit im wesentlichen konstanter Schälkraft erfolgen kann. Die Höhe der Schälkraft lässt sich durch Wahl der Drehzahl vorgeben, wobei denkbar ist, für vorgegebene Schälaufgaben in der Maschinensteuerung verschiedene Drehzahlprofile zu hinterlegen. Besonders günstig ist es im Übrigen, wenn die Federkonstante der mindestens einen Rückstellfeder so gewählt ist, dass eine fliehkraftbedingte Zustellung des mindestens einen Schneidelements aus einer Endstellung (Grundstellung) heraus erst erfolgt, wenn die auf das mindestens eine Fliehgewicht wirkende Zentrifugalkraft wesentlich größer ist als die (auf das Fliehgewicht wirkende) Gewichtskraft, besonders bevorzugt mindestens mehr als drei Mal so groß ist wie diese. Eine solche Ausgestaltung ist nützlich für Maschinen zum Außenschälen eines Schlauches, bei denen die Drehachse, um welche die Tragstruktur rotiert, mehr oder weniger horizontal ausgerichtet ist, was namentlich bei der Bearbeitung großdimensionierter Schlauchabschnitte für deren Handhabung günstig ist. Denn auf diese Weise wird der Einfluss der auf die Fliehgewichte wirkenden Schwerkraft im Verhältnis zu den Auswirkungen der Fliehkraft zurückgedrängt, was sich positiv auswirkt auf ein homogenes Bearbeitungsergebnis. Eine andere Möglichkeit bei mehr oder weniger horizontal orientierter Rotationsachse den Einfluss der Schwerkraft zurückzufahren, besteht in der weiter oben bereits erwähnten Koppelung der Zustellbewegung zweier einander diametral gegenüberliegender Schneidelemente mit jeweils einem eigenen zugeordneten Fliehgewicht, weil sich in diesem Falle die schwerkraftbedingten Einflüsse der beiden jeweils auf eines der Schneidelemente einwirkenden Fliehgewichte kompensieren.

Geeignete, die Linearbewegung des Fliehgewichts in eine gegenläufige Linearbewegung des zugeordneten Schneidelements umlenkende Getriebe können dabei auf verschiedene Weise realisiert sein, beispielsweise in Form zweier über ein Ritzel gekoppelter Zahnstangen. Vorteilhaft ist bei einer solchen Ausgestaltung, dass der - bezogen auf die Drehachse - zentrale Raum der Maschine frei von Einbauten gehalten werden kann, was der Bearbeitung von Schläuchen mit großem Außendurchmesser entgegenkommt.

Die Stütz- und Führungsstruktur der erfindungsgemäßen Maschine kann im Rahmen der vorliegenden Erfindung auf unterschiedliche Weise ausgeführt sein. Bei einer in dieser Hinsicht besonders bevorzugten, insbesondere beim Abtragen von Material am Außenumfang des Schlauches anwendbaren Weiterbildung der Erfindung umfasst die Stütz- und Führungsstruktur einen zentralen, in den zu bearbeitenden Schlauch einführbaren Führungsdorn. Besonders günstig ist es dabei, wenn letzterer mit einem veränderbaren Außendurchmesser ausgeführt ist, beispielsweise indem er eine Mehrzahl spreizbarer Stützelemente oder einen aufweitbaren Quellkörper aufweist. Dies ermöglicht die Bearbeitung von Schläuchen mit unterschiedlichem Innendurchmesser ohne aufwendige Umrüstung der Maschine.

Anstelle eines zentralen Führungsdornes - oder ggf. auch zusätzlich zu einem solchen - kann die Stütz- und Führungsstruktur auch außen auf den zu bearbeitenden Schlauch wirkende Stützelemente umfassen. Bei einer solchen Weiterbildung, die sich insbesondere beim Abtragen von Material am Innenumfang des Schlauches eignet, ist ersichtlich die Anpassung der Stütz- und Führungsstruktur an unterschiedliche Schlauchdurchmesser besonders einfach möglich.

Eine nochmals andere bevorzugte Weiterbildung der vorliegenden Erfindung zeichnet sich schließlich dadurch aus, dass das mindestens eine Schneidelement einen Schneidplattenträger mit einer auswechselbar daran angebrachten Schneidplatte umfasst. Eine solche, bisher bei Schlauchschälmaschinen nicht realisierte Gestaltung ist ersichtlich besonders wirtschaftlich und zwar nicht nur im Hinblick auf die Kosten der auf Grund Verschleißes zu erneuernden Komponenten. Vielmehr ist typischerweise beim Auswechseln allein einer an einem Schneidplattenträger angebrachten Schneidplatte ein anschließendes neues Einrichten der Maschine nicht erforderlich, anders als dies typischerweise bei solchen Maschinen der Fall ist, bei denen in Folge Verschleißes der Schneide eine größere Komponente aus der rotierenden Tragstruktur entnommen und ersetzt werden muss.

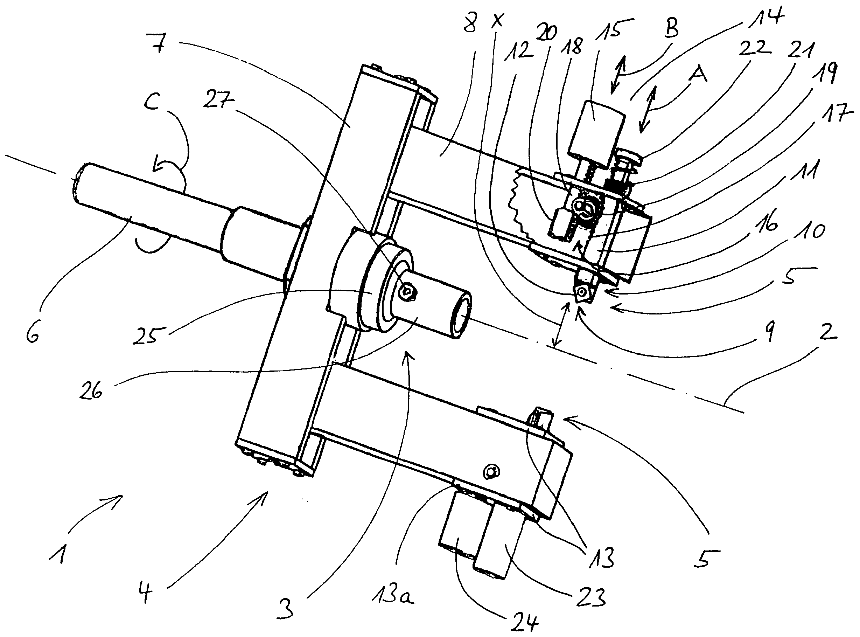

Im Folgenden wird die vorliegende Erfindung anhand eines in der Zeichnung veranschaulichten bevorzugten Ausführungsbeispiels näher erläutert. Die Zeichnung zeigt dabei in (teilweise geschnittener) perspektivischer Ansicht das zum Abtragen von Material am Außenumfang eines Schlauches ausgeführte Abtragwerkzeug einer erfindungsgemäßen Maschine zum Abtragen von Material am Außenumfang eines Schlauches.

Das in der Zeichnung abgebildete, für eine - in üblicher Weise ein Maschinengestell und einen Antriebsmotor umfassende - Maschine zum Abtragen von Material am Au-ßenumfang eines Schlauches bestimmte Abtragwerkzeug 1 ist im Hinblick auf die spezifische Form des Materialabtrags durch spanabhebendes Schälen als um eine Drehachse 2 rotierend antreibbares Außenschälwerkzeug ausgeführt. An ihm ist eine Stütz- und Führungsstruktur 3 für einen konzentrisch zur Drehachse 2 angeordneten Schlauch angebracht.

Das Abtragwerkzeug 1 umfasst eine um die Drehachse 2 rotierende Tragstruktur 4 und zwei von dieser getragene, einander diametral gegenüberliegende Abtragelemente 5. Die Tragstruktur besteht dabei im Wesentlichen aus einer mit einem Schaft 6 fest verbundenen, sich quer zur Drehachse 2 erstreckenden Traverse 7 und zwei an dieser angebrachten, sich im Wesentlichen parallel zu der Drehachse 2 erstreckenden Tragarmen 8. Die Abtragelemente 5 sind im Wesentlichen an den freien Enden der Tragarme 8 angeordnet.

Angesichts der spezifischen Wirkungsweise des Abtragswerkzeugs 1 (spanabhebendes Abtragen des Materials durch Schälen) sind die Abtragelemente 5 jeweils als ein eine Schneide 9 aufweisendes Schneidelement 10 ausgeführt. Jedes Schneidelement 10 umfasst dabei einen Schneidplattenträger 11 mit einer auswechselbar daran angebrachten Schneidplatte 12.

Die beiden Schneidelemente 10 sind nicht starr mit dem jeweils zugeordneten Tragarm 8 verbunden. Sie sind vielmehr linear, radial verschiebbar (Doppelpfeil A) an diesen geführt, und zwar in Führungsplatten 13. Auf die beiden Schneidelemente 10 wirkt jeweils ein Verstellmechanismus 14 mit einer ein Fliehgewicht 15 umfassenden Zentrifugalkraft-Verstellung. Dabei ist jedem Schneidelement 10 ein eigenes Fliehgewicht 15 zugeordnet, wobei auch die Fliehgewichte linear, radial verschiebbar (Doppelpfeil B) an den Tragarmen 8 geführt sind. Jeweils ist das Schneidelement 10 mit dem diesem zugeordneten Fliehgewicht 15, welches benachbart zu dem Schneidelement 10 angeordnet ist, über ein Getriebe 16 gegenläufig gekoppelt. Das Getriebe 16 besteht dabei im Wesentlichen aus einer an dem Schneidelement 10 ausgeführten zahnstangenförmigen Verzahnung 17, einer an dem Fliehgewicht 15 angebrachten Zahnstange 18 und einem zwischen der Verzahnung 17 und der Zahnstange 18 angeordneten, an dem betreffenden Tragarm 8 drehbar gelagerten Ritzel 19, welches mit der Verzahnung 17 und der Zahnstange 18 kämmt. Die weiter oben erwähnte radiale Führung der Zahnstange 18 erfolgt dabei jeweils radial außen in der radial äußeren Führungsplatte 13a; zusätzlich ist endseitig an der Zahnstange 18 ein Führungsblock 20 angebracht, der an einer korrespondierenden - nicht dargestellten - Führungsbahn gleitend geführt ist.

Auf jedes Schneidelement 10 wirkt eine als Druckfeder ausgeführte Rückstellfeder 21, welche das betreffende Schneidelement im Sinne einer Verringerung der Anlagekraft der Schneide 9 an dem Außenumfang des zu bearbeitenden Schlauches vorspannt. Hierzu stützt sich die Rückstellfeder einerseits außen auf der radial äußeren Führungsplatte 13a und andrerseits an einer endseitig an dem Schneidelement angeordneten Kopfplatte 22 ab. Mittels einer an der äußeren Führungsplatte 13a fixierten Schutz- und Führungshülse 23 ist jeweils die Rückstellfeder 21 und der äußere Bereich des Schneidelements 10 gegen Verschmutzung durch Späne und Beschädigung geschützt. Auch die Fliehgewichte 15 sind zum Schutz der Zahnstange 18 vor Verschmutzung von einer an der äußeren Führungsplatte 13a fixierten Schutzhülse 24 abgedeckt.

Der jeweils dem Schneidelement 10 zugeordnete Verstellmechanismus 14 bewirkt, dass mit zunehmender Drehzahl (Pfeil C) der Tragstruktur 4 um die Drehachse 2 der Abstand x der betreffenden Schneide 9 zur Drehachse 2 abnimmt und, wenn die Schneiden an dem Schlauch an dessen Außenumfang anliegen, die Anlagekraft der Schneiden am Schlauch, d.h. an dessen Außenumfang, zunimmt.

Die an dem Abtragwerkzeug angebrachte eine Stütz- und Führungsstruktur 3 für einen konzentrisch zur Drehachse 2 angeordneten Schlauch umfasst eine Wälzlageranordnung 25, mittels derer ein Halterohr 26 für einen - nicht dargestellten - Führungsdorn koaxial relativ zu dem Schaft 6 drehbar gelagert ist. Mittels einer Klemmschraube 27 lässt sich ein auf den zu bearbeitenden Schlauch abgestimmter Führungsdorn an dem Halterohr 26 fixieren.

## Patentansprüche

1. Maschine zum Abtragen von Material am Umfang eines Schlauches, umfassend einen Antriebsmotor, ein von diesem um eine Drehachse (2) rotierend antreibbares Abtragwerkzeug (1) und eine Stütz- und Führungsstruktur (3) für einen konzentrisch zur Drehachse angeordneten Schlauch, wobei das Abtragwerkzeug eine rotierende Tragstruktur (4) und mindestens ein von dieser getragenes Abtragelement (5) umfasst und auf das Abtragelement (5) ein Verstellmechanismus (14) mit einer mindestens ein Fliehgewicht (15) umfassenden Zentrifugalkraft-Verstellung wirkt, wobei mit zunehmender Drehzahl der Tragstruktur (4) die Anlagekraft des Abtragelements am Schlauch zunimmt, **dadurch gekennzeichnet, dass** das Abtragelement (5) und ein diesem zugeordnetes, benachbart zu diesem angeordnetes Fliehgewicht (15) über ein Getriebe (16) gegenläufig gekoppelt sind.

2. Maschine nach Anspruch 1, **dadurch gekennzeichnet, dass** das Abtragelement (5) an der Tragstruktur (4) linear, bevorzugt im Wesentlichen radial verschiebbar (A) geführt ist.

3. Maschine nach Anspruch 1 oder Anspruch 2, **dadurch gekennzeichnet, dass** jedem Abtragelement (5) ein linear, bevorzugt im Wesentlichen radial verschiebbares (B) Fliehgewicht (15) zugeordnet ist.

4. Maschine nach einem der Ansprüche 1 bis 3, **dadurch gekennzeichnet, dass** zwei einander im Wesentlichen diametral gegenüberliegende Abtragelemente (5) vorgesehen sind.

5. Maschine nach Anspruch 4, **dadurch gekennzeichnet, dass** die Abtragelemente (5) einen geringen Versatz relativ zu jener durch die Drehachse (2) verlaufenden Mittelebene aufweisen, die parallel zu der Zustellbewegung der Abtragelemente verläuft.

6. Maschine nach einem der Ansprüche 1 bis 5, **dadurch gekennzeichnet, dass** auf jedes Abtragelement (5) eine dieses im Sinne einer Verringerung der Anlagekraft des Abtragelements an dem Schlauch vorspannende Rückstellfeder (21) wirkt.

7. Maschine nach Anspruch 6, **dadurch gekennzeichnet, dass** die Federkonstante der Rückstellfeder (21) so gewählt ist, dass eine fliehkraftbedingte Zustellung des Abtragelements (5) aus einer Endstellung heraus erst erfolgt, wenn die auf das Fliehgewicht (15) wirkende Zentrifugalkraft wesentlich größer ist als die Gewichtskraft, bevorzugt mindestens mehr als drei Mal so groß wie diese.

8. Maschine nach einem der Ansprüche 1 bis 7, **dadurch gekennzeichnet, dass** es sich bei ihr um eine Schlauchschälmaschine zum spanabhebenden Abtragen von Material am Umfang des Schlauches handelt, wobei das Abtragelement (5) als ein eine Schneide (9) aufweisendes Schneidelement (10) ausgeführt ist.

9. Maschine nach Anspruch 8, **dadurch gekennzeichnet, dass** das Schneidelement (10) einen Schneidplattenträger (11) mit einer auswechselbar daran angebrachten Schneidplatte (12) umfasst.

10. Maschine nach einem der Ansprüche 1 bis 9, **dadurch gekennzeichnet, dass** sie zum Abtragen von Material am Außenumfang des Schlauches ausgeführt ist, wobei mit zunehmender Drehzahl der Tragstruktur (4) der Abstand (x) des Abtragelements (5) zur Drehachse (2) abnimmt.

11. Maschine nach Anspruch 10, **dadurch gekennzeichnet, dass** die Stütz- und Führungsstruktur (3) einen zentralen, in den Schlauch einführbaren Führungsdorn umfasst.

12. Maschine nach Anspruch 11, **dadurch gekennzeichnet, dass** der Führungsdorn mit einem veränderbaren Außendurchmesser ausgeführt ist.

13. Maschine nach einem der Ansprüche 1 bis 9, **dadurch gekennzeichnet, dass** sie zum Abtragen von Material am Innenumfang des Schlauches ausgeführt ist, wobei mit zunehmender Drehzahl der Tragstruktur der Abstand des Abtragelements zur Drehachse zunimmt.

14. Maschine nach Anspruch 13, **dadurch gekennzeichnet, dass** die Tragstruktur eine Hohlwelle umfasst, in der zumindest ein Teil des Verstellmechanismus' aufgenommen ist.

15. Maschine nach Anspruch 13 oder Anspruch 14, **dadurch gekennzeichnet, dass** die Stütz- und Führungsstruktur außen auf den Schlauch wirkende Stützelemente umfasst.

## Claims

1. Machine for removing material on the circumference of a hose, comprising a drive motor, a removal tool (1) driven thereby which rotates abut an axis of rotation (2) and a support and guide structure (3) for a hose arranged concentrically to the axis of rotation, wherein the removal tool comprises a rotating carrier structure (4) and least one removal element (5) which is borne thereby, and acting on the removal element (5) is an adjusting mechanism (14) with centrifugal force adjustment comprising at least one flyweight (15), wherein with increasing rotational speed of the carrier structure (4) the contact force of the removal element on the hose increases, **characterised in that** the removal element (5) and flyweight (15) assigned and arranged adjacent thereto are coupled in a contrarotating manner via a gear mechanism (16).

2. Machine according to claim 1 **characterised in that** the removal element (5) is guided linearly, preferably in an essentially radially displaceable manner (A) on the carrier structure (4).

3. Machine according to claim 1 or claim 2 **characterised in that** a linearly, preferably essentially radially displaceable (B) flyweight (15) is assigned to each removal element (5).

4. Machine according to any one of claims 1 to 3 **characterised in that** two essentially diametrically opposite removal elements (5) are envisaged.

5. Machine according to claim 4 **characterised in that** the removal elements (5) are slightly offset relative to the middle plane running through the axis of rotation (2) which extends in parallel to the feed motion of the removal elements.

6. Machine according to any one of claims 1 to 5 **characterised in that** a pre-tensioning return spring (21) acts on each removal element (5) in the sense of reducing the contact force of the removal element on the hose.

7. Machine according to claim 6 **characterised in that** the spring constant of the return spring (21) is selected so that a centrifugal force-induced movement of the removal element (5) from its end position only takes place when the centrifugal force acting on the flyweight (15) is much greater than the weight force, preferably at least more than three times greater than this.

8. Machine according to any one of claims 1 to 7 **characterised in that** it is a hose skiving machine for the removal by cutting of material on the circumference of the hose, wherein the removal element (5) is designed as a cutting element (10) having a blade (9).

9. Machine according to claim 8 **characterised in that** the cutting element (10) comprises a cutting plate holder (11) with a cutting plate (12) applied thereto in a replaceable manner.

10. Machine according to any one of claims 1 to 9 **characterised in that** it is designed to remove material on the external circumference of the hose, wherein with increasing rotational speed of the carrier structure (4) the distance (x) of the removal element (5) from the axis or rotation (2) decreases.

11. Machine according to claim 10 **characterised in that** the support and guide structure (3) comprises a central guide mandrel which can be introduced into the hose.

12. Machine according to claim 11 **characterised in that** the guide mandrel is designed with an adjustable external diameter.

13. Machine according to any one of claims 1 to 9 **characterised in that** it is designed to remove material on the inner circumference of the hose, wherein with increasing rotational speed of the carrier structure the distance of the removal element from the axis of rotation increases.

14. Machine according to claim 13 **characterised in that** the carrier structure comprises a hollow shaft in which at least a part of the adjusting mechanism is accommodated.

15. Machine according to claim 13 or claim 14 **characterised in that** the support and guide structure comprises support elements acting externally on the hose.

## Revendications

1. Machine, destinée à enlever de la matière sur la périphérie d'un flexible, comprenant un moteur d'entraînement, un outil d'enlèvement (1) susceptible d'être entraîné en rotation par celui-ci autour d'un axe de rotation (2) et une structure d'appui et de guidage (3) pour un flexible placé de manière concentrique par rapport à l'axe de rotation, l'outil d'enlèvement comprenant une structure porteuse (4) rotative et au moins un élément d'enlèvement (5) porté par celle-ci et sur l'élément d'enlèvement (5) agissant un mécanisme d'ajustage (14) avec un ajustage de la force centrifuge comprenant au moins une masselotte (15), sachant qu'au fur et à mesure de l'augmentation de la vitesse de rotation de la structure porteuse (4), la force d'appui de l'élément d'enlèvement sur le flexible s'accroît, **caractérisée en ce que** l'élément d'enlèvement (5) et une masselotte (15) associée à ce dernier, placée dans son voisinage sont couplés en sens opposé par l'intermédiaire d'une transmission (16).

2. Machine selon la revendication 1, **caractérisée en ce que** l'élément d'enlèvement (5) est guidé de manière linéaire, de préférence en étant sensiblement déplaçable (A) en direction radiale sur la structure porteuse (4).

3. Machine selon la revendication 1 ou la revendication 2, **caractérisée en ce qu'**à chaque élément d'enlèvement (5) est associée une masselotte (15) déplaçable de manière linéaire, de préférence sensiblement en direction radiale.

4. Machine selon l'une quelconque des revendications 1 à 3, **caractérisée en ce que** deux éléments d'enlèvement (5) en vis-à-vis sensiblement diamétral sont prévus.

5. Machine selon la revendication 4, **caractérisée en ce que** les éléments d'enlèvement (5) présentent un faible déport par rapport au plan médian s'écoulant à travers l'axe de rotation (2) qui s'écoule à la parallèle du déplacement de mise en prise des éléments d'enlèvement.

6. Machine selon l'une quelconque des revendications 1 à 5, **caractérisée** en ce sur chaque élément d'enlèvement (5) agit un ressort de rappel (21) qui précontraint celui-ci dans le sens d'une réduction de la force d'appui de l'élément d'enlèvement sur le flexible.

7. Machine selon la revendication 6, **caractérisée en ce que** la constante de ressort du ressort de rappel (21) est choisie de telle sorte qu'une mise en prise conditionnée par la force centrifuge de l'élément d'enlèvement (5) à partir d'une position finale ne s'effectue qu'une fois que la force centrifuge agissant sur la masselotte (15) est nettement supérieure au poids, de préférence correspond au moins au triple de celui-ci.

8. Machine selon l'une quelconque des revendications 1 à 7, **caractérisée en ce qu'**il s'agit d'une dénudeuse à flexibles pour le retrait par enlèvement de copeaux de matière sur la périphérie du flexible, l'élément d'enlèvement (5) étant réalisé sous la forme d'un élément coupant (10) comportant une lame (9).

9. Machine selon la revendication 8, **caractérisée en ce que** l'élément coupant (10) comprend un porte-plaquette de coupe (11) avec une plaquette de coupe (12) montée dessus de manière interchangeable.

10. Machine selon l'une quelconque des revendications 1 à 9, **caractérisée en ce qu'**elle est réalisée pour l'enlèvement de matière sur la périphérie extérieure du flexible, sachant qu'au fur et à mesure que la vitesse de rotation de la structure porteuse (4) augmente, l'écart (x) entre l'élément d'enlèvement (5) et l'axe de rotation (2) diminue.

11. Machine selon la revendication 10, **caractérisée en ce que** la structure d'appui et de guidage (3) comporte une broche de guidage centrale, pouvant être introduite dans le flexible.

12. Machine selon la revendication 11, **caractérisée en ce que** la broche de guidage est réalisée avec un diamètre extérieure variable.

13. Machine selon l'une quelconque des revendications 1 à 9, **caractérisée en ce qu'**elle est réalisée pour l'enlèvement de matière sur la périphérie intérieure du flexible, sachant qu'au fur et à mesure que la vitesse de rotation de la structure porteuse augmente, l'écart entre l'élément d'enlèvement et l'axe de rotation augmente.

14. Machine selon la revendication 13, **caractérisée en ce que** la structure porteuse comprend un arbre creux, dans lequel est logée au moins une partie du mécanisme d'ajustage.

15. Machine selon la revendication 13 ou la revendication 14, **caractérisée en ce que** la structure d'appui et de guidage comprend des éléments d'appui agissant à l'extérieur sur le flexible.
